# EUROPEAN PATENT APPLICATION

(11) **EP 2 312 268 A1**
(43) Date of publication of application: **20.04.2011**
(21) Application number: 09013094.9
(22) Date of filing: 16.10.2009
(51) Int. Cl.: G01B 11/25, A61C 9/00

(54) **Scanning device for scanning dental objects and a method for scanning dental objects**

(71) Applicant: Straumann Holding AG, 4002 Basel (CH)
(72) Inventor: Seidl, Florian, 82166 Gräfelfing (DE); Schaller, Hans, 82166 Gräfelfing (DE)
(74) Representative: Grünecker, Kinkeldey, Stockmair & Schwanhäusser Anwaltssozietät

(57) **Abstract**

The invention relates to a scanning device for scanning dental objects comprising a base plate to which dental objects can be attached and a mounting structure such as a mounting plate to which an optical scanning system is attached and wherein the scanning device further comprises means for moving the mounting structure. Furthermore, the invention relates to a method for scanning dental objects comprising the steps of (a) attaching a dental object to the base plate of the inventive scanning device, wherein a first angle between the surface of the base plate and the surface of the mounting structure or the plane defined by the optical axes of the scanning device is enclosed, (b) scanning the attached dental object to obtain a first data set, (c) using the means for moving the mounting structure to change the first angle to a second angle, and (d) scanning the attached dental object to obtain a second data set.

## Description

The invention concerns a scanning device for scanning dental objects and a method for scanning dental objects.

Devices for scanning tooth models so as to obtain a data set which digitally represents the tooth model are known. Such data sets can be used for the automatic production of dental prosthesis elements.

US 2007/0248929 A1 discloses a device for scanning a tooth model in a three-dimensional schematic representation. A first plate whereon an optical scanning system (laser illumination and camera) is attached is arranged at an angle of 20° to 80° relative to a second plate whereon a base plate may be provided. The tooth model may be arranged on the base plate which may be implemented as a rotary disk and may be provided with a rotary shaft. The rotary shaft may be displaced in a direction that lies transversely to the plane defined by the scanning area and in a second direction perpendicular to the first direction.

US 2004/0032594 A1 discloses the use of measuring pots which may be attached to a rotating plate. To the measuring pots, e.g., one or a plurality of tooth models may be attached. A measuring pot may be moved into the measuring field by rotating the rotating plate. Once the measuring pot arrives in the measuring field, the rotating plate stops rotating and the scanning of the tooth model(s) in the measuring pot may be carried out by means of a linear movement of a measuring table. This produces, as the laser scanner is arranged at one given angle between 20° and 80°, a measuring line which can see one side of the tooth to be scanned. To be able to obtain additional measuring lines from additional viewing angles, the pot located in the measuring field can be rotated around its own axis between the individual measurements, e.g., by 45° to achieve eight images. Thus, eight measuring lines from different angles may be obtained wherein portions of the thus obtained surface data appear in several measuring lines.

It is the object of the present invention to improve known devices for scanning dental objects and to improve a method for scanning dental objects.

This object is achieved by the scanning device for scanning dental objects of claim 1 and the method for scanning dental objects according to claim 10.

Preferred embodiments of the present invention are disclosed in the dependent claims.

An inventive scanning device for scanning dental objects comprises a base plate to which at least one dental object can be attached and a mounting structure such as a mounting plate to which an optical scanning system is attached and the scanning device further comprises means for moving the mounting structure. With the optical scanning system the at least one dental object, when located in a scanning area, can be scanned. The means for moving the mounting structure allow to move the mounting structure and the base plate relative to each other, thus, after the movement base plate and mounting structure have another relative position to each other than before the movement. A further consequence of such a movement may enable the optical scanning system, attached to the mounting structure, to have another position relative to the dental object to be scanned. Thus, the dental object may be scanned from another direction. One advantage such a movement has is that various sides of a dental object may be scanned without displacing the dental object.

As already indicated the mounting structure may be a mounting plate. Such a plate may provide enough space at which, e.g., devices of the optical scanning system, like illumination device and light detecting device, may be attached to. However, the mounting structure may also be composed of rails or rods, e.g., made of metal and/or fibre-glass reinforced plastic. These rails or rods may be attached to a frame wherein preferably the frame is arranged parallel to the optical axis of the optical scanning system. By using rails or rods, e.g., the weight of the scanning device may be reduced. Illumination devices and/or light detecting devices of the optical scanning system and/or sensors for detecting a position of the mounting structure may also be attached to the rails or rods.

The means for moving may be adapted for rotating or tilting the mounting structure relative to the base plate. Moreover, the means for moving may be adapted for changing an angle enclosed by the surface of the base plate and the surface of the mounting structure.

Rotating may mean that the mounting structure may be rotatable about an axis of rotation that is arranged parallel to the surface of the base plate, while tilting may mean that an axis of rotation about which the mounting structure may be rotatable is arranged at some angle with respect to the surface of the base plate.

The surface of the mounting structure in case of a mounting plate is defined by the surface of the plate. In case the mounting structure is comprised of rails or rods or some similar arrangement the surface may, e.g., be defined by a plane through a frame of the mounting structure to which the rails or rods or the like may be attached.

A viewing angle may be defined by the surface of the base plate and a plane defined by the optical axes of the optical scanning system (illumination device and light detecting device). In general the plane defined by the optical axes of the optical scanning system is parallel to the surface of the mounting structure and thus, the viewing angle has the same value as the angle enclosed by the surface of the base plate and the surface of the mounting structure. By changing the angle enclosed between the surface of the base plate and the surface of the mounting structure the viewing angle onto the at least one dental object may be changed. In this way, e.g., two scanning measurements of the at least one dental object may be performed and thus, may enable to e.g. scan an area of the at least one dental object in one viewing angle which may not be visible from the other viewing angle.

A viewing angle onto at least one dental object located in a scanning area of the optical scanning system may be changed when the means for moving the mounting structure are used. This allows for viewing and scanning of different regions of the dental object. Thus, also regions may be scanned that otherwise would be hidden by some portion of the dental object that lies in the direction of the laser light.

A scanning area may be defined as an area in which the dental object may be preferably located such that it may be reached by the illumination area and the viewing area in an easy way, i.e. without having to move the dental object to a large extent.

Preferably, the angle enclosed by the surface of the base plate and the surface of the mounting structure is changed between the scanning measurements, i.e., during scanning the angle has a fixed value.

In another embodiment, it may be preferred to continuously change said enclosed angle during the scanning measurement.

The means for moving may be adapted for changing the angle between the surface of the base plate and the surface of the mounting structure in a range between 20° and 90°. In another embodiment the range of the angle between the surface of the base plate and the surface of the mounting structure may be between 10° to 90°, 0° to 90° or 0° to 180°, or some other angle region between these values. In case the lower limit, e.g., amounts to 0° the optical scanning system may scan a dental object directly from one side. At an angle of 90° the optical scanning system may scan the dental object from the top, e.g., the occlusal surface of a dental object.

By having an angle region between 0° and 180° it is, e.g., possible to scan a dental object from one side to the upper (e.g. occlusal) surface and then to the side opposite to the first side.

The base plate may be adapted to be linearly displaced in a first direction and in a second direction. As the at least one dental object is attached to the base plate it may also be linearly displaced and thus, may be displaced relative to the optical scanning system which enables scanning different areas of the at least one dental object.

Preferably, the first and the second direction are perpendicular to each other and lie parallel to the plane of the surface of the base plate.

The scanning device may further comprise at least one holding device for holding at least one dental object. The at least one holding device may be attached directly to the base plate or it may be attached to an additional rotatable plate. The rotatable plate may be attached to the base plate and may be rotatable about an axis of rotation in both directions (clockwise and counter clockwise) or only in one direction. E.g., the rotatable plate may be used to rotate the at least one holding device into a scanning area.

A holding device may be provided as a pot onto or into which at least on dental object may be attached. For fixing the dental object inside or on the holding device, e.g., modelling clay may be used. A holding device for a dental object such as a complete dental jaw may comprise a template which e.g. may be provided for adjusting the dental arch.

The at least one holding device can be rotatable about an axis of rotation. By rotating the holding device the dental object may be scanned from different angles. Portions of the thus obtained surface data of the dental object may appear in several scanning stripes and by means of these overlapping areas which may be used by a matching software to assemble the individual scanning stripes to form a complete 3-D surface image of the dental object.

The at least one holding device may be rotated between individual measurements by, e.g., 45° such that eight scanning stripes from different angles may be achieved from the dental object. Also other rotation angles may be used such that more or less than eight scanning stripes may be recorded. As a result of these various individual measurements overlapping regions of the scanned dental object are recorded which enable a precise reconstruction of the surface of the dental object by, e.g., using matching methods.

The optical scanning system may comprise an illumination device and a light detecting device. The illumination device may be a laser and the light detecting device may be a camera with a CCD chip or a CCD chip alone.

The illumination device and the light detecting device are both attached to the mounting structure and thus, if the angle between the surface of the base plate and the surface of the mounting structure is changed both the angle of the viewing area of the camera and the angle of the illumination area of the illumination device are changed to the same amount, i.e. by the same angle, however, the relative position between light detecting device and illumination device is not changed. The overlap region of the illumination area and the viewing area is called recording line. In the recording line, e.g., data points of the surface of a dental object may be recorded. And by e.g. moving the dental object in a direction perpendicular to the recording line a scanning stripe may be recorded, i.e. the surface of the dental object is scanned in the area that the scanning stripe covers.

The mounting structure may be moved by means of a motor, which may be e.g. a step or servo motor. This allows for automatic computer controlled movement of the mounting structure.

The scanning device may further comprise a sensor for detecting a position of the mounting structure, preferably for detecting the angle between the surface of the base plate and the surface of the mounting structure. For example, some reference markings may be provided on an unmovable part of the scanning device wherein the reference markings may be detected by the sensor and wherein each of the reference markings is related to a certain value of the angle. Related may, e.g., mean that the reference marking itself indicates the value of the angle in numbers or that some relation between the reference marking and the value of the angle exists which, e.g., may be looked up at some table and/or stored data set.

By knowing the position of the mounting structure the matching method for matching overlapping regions of scanning stripes may be simplified.

A method for scanning dental objects comprises the steps of (a) attaching a dental object to the base plate of the inventive scanning device, wherein a first angle between the surface of the base plate and the surface of the mounting structure is enclosed, (b) scanning the attached dental object to obtain a first data set, (c) using the means for moving the mounting structure to change the first angle to a second angle, and (d) scanning the attached dental object to obtain a second data set.

By changing the angle between a first and second measurement (scanning) the viewing angle on the dental object may be changed and thus different regions of the dental object may be scanned.

In the above described method after step b) and/or after step d) the dental object may be linearly displaced and/or rotated and then scanned to obtain one or two further data sets.

By further linearly displacing the dental object at each of the two angles two different scanning stripes may be recorded.

A dental object may be a model of a single tooth, e.g., from a split cast model, or two or a plurality of neighbouring teeth or a complete dental jaw. The one or the more teeth which may include complete teeth, or a tooth/teeth which may have been prepared by a dentist in a dental treatment or dental prosthesis.

Beyond the above, the invention contains additional variants and aspects that are disclosed in the present description and in the appended drawings on the basis of special configurations or in the form of general statements. Advantageous embodiments of the present device are explained on the basis of the figures, in which:
Fig. 1 shows a schematic three-dimensional view of a scanning device for scanning dental objects;
Fig. 2 shows s schematic view of the scanning device, wherein the mounting structure is arranged at two different angles with respect to the base plate;
Fig. 3a and Fig. 3b show a dental object provided in two different heights h1, h2; and
Fig. 4 shows three scanning stripes on a dental object which overlap partly.

In the individual figures, identical or similar or identically or similarly acting parts are provided with the same reference numbers, or are shown comparably, so that parts as well as combinations thereof, their functions and their modes of action are immediately understandable to a person skilled in the art even from viewing the figures of the drawing alone, from comparing them and/or from the following statements, alone if desired, even if no references between specific figures and/or between figures and text are explicitly indicated or shown.

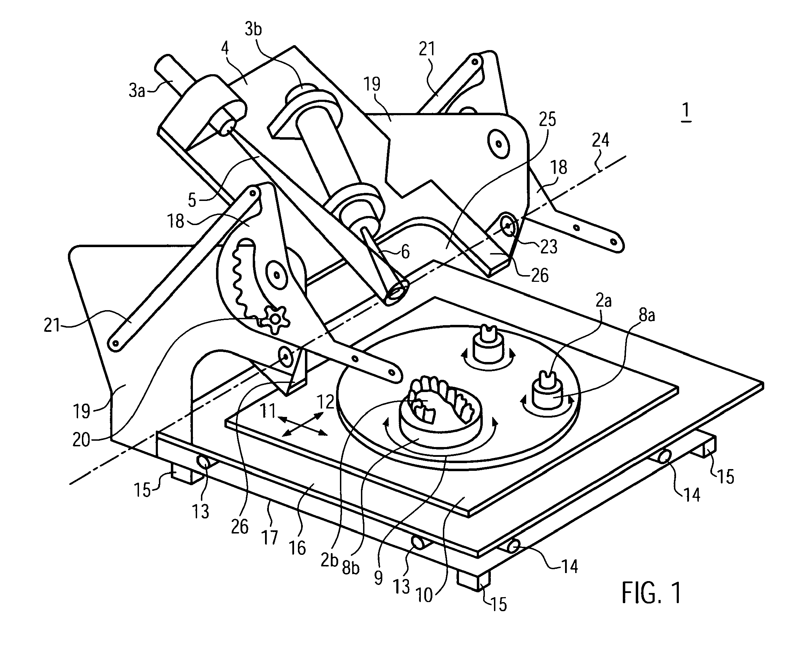

In fig. 1, a three-dimensional schematic view of a scanning device 1 for scanning dental objects 2a, 2b can be seen. The scanning device 1 is provided with an optical scanning system 3a, 3b comprising, e.g., a laser illumination device 3a (in the following called laser) and a light detecting device 3b, here a camera (a camera with a CCD chip may be used but also a CCD chip alone is possible), which are attached to a mounting structure 4 which in this embodiment is provided as a mounting plate 4. The laser 3a may illuminate dental objects 2a, 2b, e.g., dental jaw 2b or one or more teeth 2a, in a limited illumination area 5 and the camera 3b may record data in a limited viewing area 6 seen by the camera 3b and the camera 3b may look at the illumination area 5 of the laser 3a. The laser may e.g. be adapted to illuminate a (thin) line shaped area e.g. by use of a cylindrical lens for focussing the laser beam to a (thin) line. The overlap region of the illumination area 5 and the viewing area 6 is called recording line 7. In the recording line 7, e.g., data points of the surface of a dental object 2a, 2b may be recorded.

By illuminating the dental object 2a, 2b with the laser light of the laser 3a a line shaped region on the dental object 2a, 2b may be illuminated. The camera 3b may look at the line-shaped region under some angle and e.g., a CCD chip comprised by the camera 3b may detect the laser light reflected from the surface of the dental object 2a, 2b in the recording line 7. By recording various recording lines next to one another the shape of the surface of the dental object 2a, 2b may be scanned, i.e. determined.

As depicted in the figure, different dental objects 2a, 2b may be attached to different holding devices 8a, 8b for holding dental objects 2a, 2b. The holding devices 8a, 8b are attached to a rotatable plate 9, which in the depicted case is round but may also have other shapes, which itself is attached to a base plate 10. The rotatable plate 9 may be rotatable about an axis of rotation in both directions (clockwise and counter clockwise) or only in one direction. The holding devices 8a, 8b may themselves also be rotatable around their axis of rotation.

Two types of holding devices 8a, 8b are shown. One type is provided as a pot 8a to which preferably one tooth 2a may be attached and the other type is provided as a template 8b to which a dental jaw 2b may be attached. The rotatable plate 9 may be provided with one or more holding devices 8a, 8b, wherein these devices 8a, 8b all may be of the same type or different types.

The shown base plate 10 may be displaced in two directions 11, 12, which in the shown case are perpendicular to each other and lie in a plane parallel to the surface of the base plate 10. The displacement may be controlled, e.g., by use of one or more step motors which may be attached to physical axes 13, 14 to transmit the movement. By moving the base plate 10 in a first direction, a dental object 2a, 2b can be displaced in this direction and an area of the dental object 2a, 2b can be scanned in this way. By displacing the base plate 10 in the second direction, the area which is scanned during displacement in the first direction can be varied. The one or more step motors and the axes 13, 14 may be located beneath the base plate 10 when the scanning device 1 is in an operational position.

To protect the one or more step motors and the axes 13, 14 to which they are attached a bottom plate 17 is provided. The scanning device may comprise feet 15, which may be height-adjustable and which may be attached at the bottom plate 17.

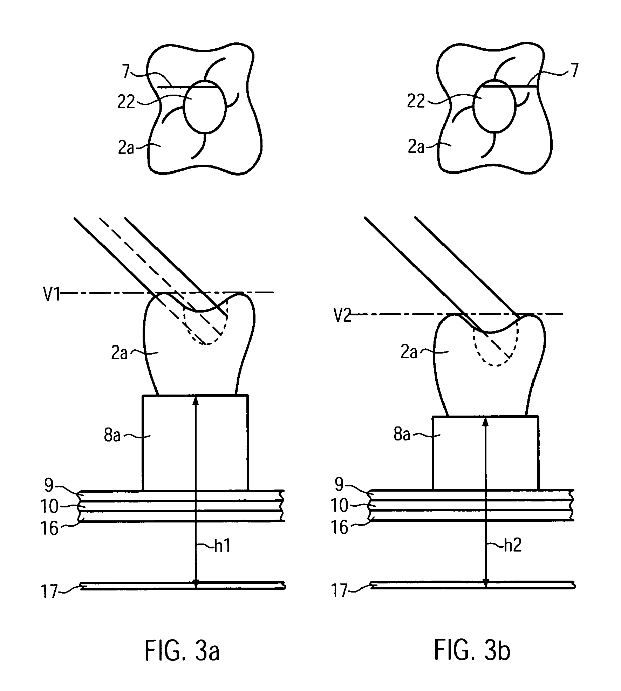

The relation between the holding device 8a, 8b and that of the recording line 7 can be varied by varying the height in which the dental object 2a, 2b is located. The height may be adjusted, e.g., by changing the height of the holding device 8a, 8b. The holding device 8a, 8b may be telescopic such as to increase or decrease its height and/or sockets with different height may be arranged between base plate 10 and the device for holding 8a, 8b. The dental object 2a, 2b to be scanned can thus be positioned at different heights. This can be relevant as far as the focussing of the illumination optics or of a recording optics is concerned. Further, the relation between the holding device 8a, 8b and the recording line 7 is changed by the respective height. For example, an area of the dental object 2a, 2b outside of the centre of the dental object 2a, 2b may be scanned. If then the dental object 2a, 2b is located at a smaller height, i.e. nearer to the base plate 10 than the height before, the scanning area 7 would scan an area that is located further inwards (with respect to the centre of the rotatable plate 9) on the dental object 2a, 2b (see also fig. 3a and fig. 3b).

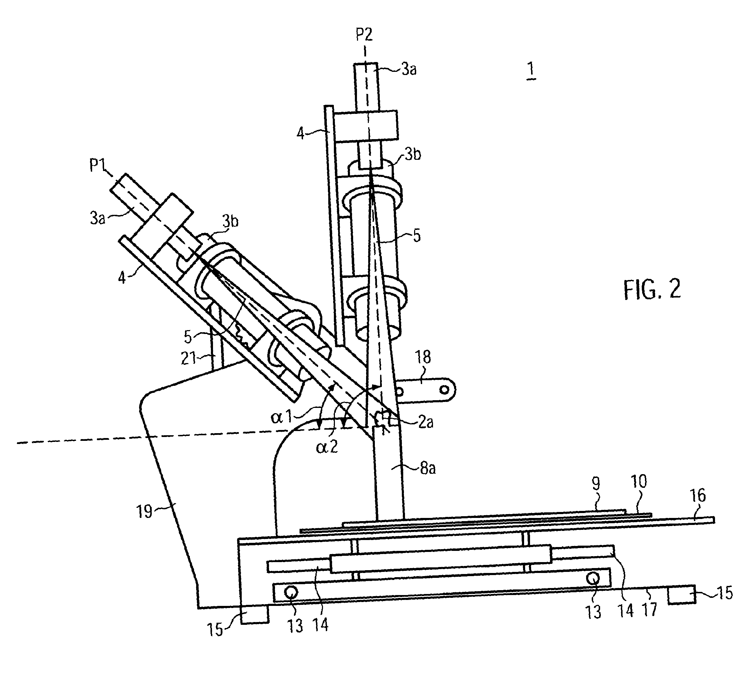

In the illustrated case, the mounting plate 4 may be rotated around an axis of rotation 24 which lies parallel to the surface of the base plate 10. To ensure that the dental object 2a, 2b to be scanned, when located in a measuring region of a first position of the mounting plate 4, lies in a region to be reached by the recording line 7 also when the mounting plate 4 is in a second position, the axis of rotation lies preferably in the area in which a dental object can be scanned (see also fig. 2). Moreover, as shown in fig. 1, the mounting plate 4 may have some recess 25 which allows to locate the dental object to be scanned in the area through which the axis of rotation 24 goes. The mounting plate has two extensions 26 in between which the recess 25 is provided and which allow the fixing of the mounting plate 4 in a rotatable manner to the scanning device 1, in particular to a side frame of the scanning device.

By using means of moving 23 which are attached to a side frame 19 of the scanning device 1 the mounting plate 4 may be arranged in different angles α relative to the surface of the base plate 10. Thereby the means for mounting can be rotated or tilted. Thus, also the optical axes of the laser 3a and the camera 3b may be inclined at such an angle α relative to the surface of the base plate 10, as both are attached to the mounting plate 4.

A cover (not shown) to protect, e.g., the dental objects 2a, 2b attached to the rotatable plate 9 may be moved by means of a joint frame 18 to which the cover may be attached. The frame joint 18 may be movable by a sprocket 20 and some reset force may be carried out by a spring 21. The joint frame may be attached (rotatable) to the side frame 19.

In fig. 2, a schematic side view of the scanning device 1 is shown, wherein the mounting plate 4 is arranged in two different positions P1, P2 such that the angles α1, α2 between the surface of the base plate 10 and the surface of the mounting plate 4 (or as indicated the optical axes of the optical scanning system) have different values. The frame joint 18, side frame 19 and spring 21 next to a viewer of the figure are not shown for the purpose of clarity. The dental object 2a, 2b may have such a shape that, e.g., from the first position P1 of the mounting plate 4 some region of the surface of the tooth 2a may not be reachable by the laser light, while in the second position P2 of the mounting plate 4 a larger extend of the surface may be reachable by the laser light.

Fig. 3a and Fig. 3b show a dental object 2a with a cavity 22 which is provided in two different heights h1 and h2, wherein the absolute value of h1 is larger than the one of h2.

Due to the different heights the recording line 7 is located at two different positions (in the upper parts of fig. 3a and fig. 3b the recording lines 7 are indicated as they would appear when the illumination area 5 and the viewing area 6 would be intersected with planes V1 and V2 which both are parallel to the base plate 10) and thus also at these two different positions the surface of the dental object may be scanned. Depending on the shape of the dental object 2a some parts to be scanned may be "hidden", e.g., by peak(s) of the dental object 2a that prevent illumination by the laser 3a and/or viewing by the camera 3b of the respective part.

By changing the height in which the scanning of the dental object 2a may be performed, the illumination area 5 and/or the viewing area 6 may be aligned with respect to the dental object 2a in such a way that peak(s) of the dental object 2a are not located in their way of propagation anymore.

By comparing the position of the recording lines 7 in fig. 3a and fig.3b one can see that in fig. 3b the recording line 7 is shifted to the right compared to the recording line 7 in fig. 3a. The same effect may have been achieved by moving the dental object 2a shown in fig. 3a to the left without varying its height h1.

With the arrangement as shown in fig. 3a the right surface side of the cavity 22 can only be scanned to some limited extend as parts of the dental object 2a lie in the direction the illumination area 5 and/or the viewing area 6 and thus these are shielded and cannot propagate into the cavity.

Even if the dental object would be rotated, e.g., around an axis of rotation of the holding device 8a the bottom of the cavity 22 would not be reachable by the recording line 7 and thus, the surface of the bottom of the cavity may not be scanned. However, if the angle between the surface of the base plate 10 and the mounting plate 4 would be changed to some larger value, e.g., to 80° or 90° the bottom of the cavity 22 would be reachable by the recording line 7.

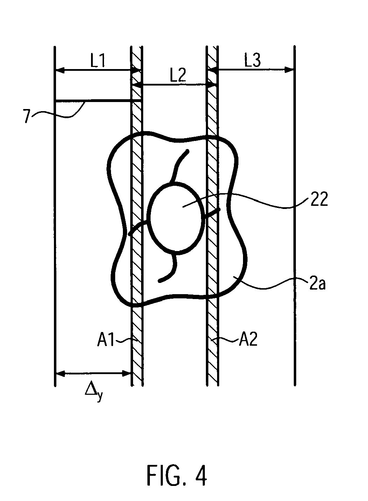

In Fig. 4 three scanning stripes L1, L2, L3, one next to the other, on a dental object 2a with a cavity 22 are shown. A scanning stripe is comprised of a plurality of parallel recording lines 7. The scanning stripes L1 and L2 overlap in area A1 and scanning stripes L2 and L3 overlap in area A2 (hatched areas). The overlapping areas A1, A2 make it possible to assemble the data of the individual scanning stripes L1, L2, L3 by means of matching methods so as to form an overall image of the dental object 2a.

For example, first the dental object 2a may be displaced together with the base plate 10 in x direction (first displacement direction) by means of which the recording line 7 is traversed over the surface of the dental object 2a. Then, the dental object 2a together with the base plate 10 may be displaced by Δy in the y direction (second displacement direction) and afterwards, again the dental object 2a may be displaced together with the base plate 10 in x direction by means of which the recording line 7 is traversed over the surface of the dental object 2a. The width of the overlap areas A1, A2 in y direction may be controlled by the used value of Δy.

The different scanning stripes L1 and L2 may e.g. be recorded with different angles α. E.g. the scanning stripe L1 has been recorded with an angle α of 40° and the stripe L2 with an angle of 90°, which allows to view deeply into the cavity and thereby scan the bottom of the cavity. Different scanning stripes may be scanned with different viewing angles.

In particular, the embodiments above refer to the configurations specified in the claims and represent the concrete device characteristics of the claimed configurations, so that the relation of the terminologies in the embodiments and in the claims is immediately comprehensive and combinations of characteristics stand as examples for the statements in the claims and do not restrict the latter, but merely illustrate them.

The present invention is explained in the description and in the drawings on the basis of the practical examples and is not limited thereto but comprises all variations, modifications, substitutions, and combinations that the person skilled in the art can gather from the present documents, in particular the claims and the general explanations in the introduction of this description and the description of the practical examples and the representations thereof in the drawings, and can combine, based on his or her expert knowledge as well as on prior art, in particular when including the complete disclosure contents of the previous applications cited in this description. In particular, all individual features and possibilities of the embodiments of the invention and the practical examples can be combined with one another.

## Claims

1. A scanning device for scanning (1) dental objects (2a, 2b) comprising a base plate (10) to which dental objects (2a, 2b) can be attached and a mounting structure (4) such as a mounting plate (4) to which an optical scanning system (3a, 3b) is attached
**characterized by**
means for moving (23) the mounting structure (4).

2. The scanning device according to claim 1, **characterized in that** the means for moving (23) are adapted for rotating or tilting the mounting structure (4) relative to the base plate (10).

3. The scanning device according to claim 1 or 2, **characterized in that** the means for moving (23) are adapted for changing an angle (α) enclosed by the surface of the base plate (10) and the surface of the mounting structure (4) and/or the viewing angle of the optical canning system (3a, 3b).

4. The scanning device according to any of claims 1 to 3 , **characterized in that** the means for moving (23) are adapted for changing an/the angle (α) between the surface of the base plate (10) and the surface of the mounting structure (4) in a range between 20° and 90°, such as between 40° and 90° or between 40 and 80°.

5. The scanning device according to any of claims 1 to 4, **characterized in that** the base plate (10) is adapted to be linearly displaced in a first direction (11) and in a second direction (12).

6. The scanning device according to any of claims 1 to 5, **characterized in that** the scanning device (1) further comprises at least one holding device (8a, 8b) for holding at least one dental object (2a, 2b).

7. The scanning device according to claim 6, **characterized in that** the at least one holding device (8a, 8b) is rotatable about an axis of rotation.

8. The scanning device according to any of claims 1 to 7, **characterized in that** the optical scanning system (3a, 3b) comprises an illumination device (3a) and a light detecting device (3b).

9. The scanning device according to any of claims 1 to 8, **characterized by** a sensor for detecting a position of the mounting structure (4).

10. A method for scanning dental objects (2a, 2b) comprising the following steps:
a) attaching a dental object (2a, 2b) to the base plate (10) of a scanning device (1) according to any of claims 1 to 9, wherein a first angle (α) between the surface of the base plate (10) and the surface of the mounting structure (4) or the plane defined by the optical axes of the scanning device is enclosed;
b) scanning the attached dental object (2a, 2b) to obtain a first data set;
c) using the means for moving (23) the mounting structure to change the first angle (α) to a second angle (α);
d) scanning the attached dental object (2a, 2b) to obtain a second data set.

11. The method according to claim 10, **characterized in that** after step b) and/or after step d) the dental object (2a, 2b) is linearly displaced and then scanned to obtain one or two further data sets.

## Amended claims

### Amended claims in accordance with Rule 137(2) EPC.

**1.** A scanning device for scanning (1) dental objects (2a, 2b) comprising a base plate (10) to which dental objects (2a, 2b) can be attached, a mounting plate (4) to which an optical scanning system (3a, 3b) is attached and
means for moving (23) the mounting plate (4)
wherein the mounting plate (4) has a recess (25),
**characterized in that**
the recess (25) allows to locate a dental object (2a, 2b) to be scanned in an area through which an axis of rotation (24) around which the mounting plate (4) may be rotated goes, and
the mounting plate (4) has two extensions (26) in between which the recess (25) is provided and which allow fixing of the mounting plate (4) in a rotatable manner.

**2.** The scanning device according to claim 1, **characterized in that** the means for moving (23) are adapted for rotating the mounting plate (4) relative to the base plate (10).

**3.** The scanning device according to claim 1 or 2, **characterized in that** the means for moving (23) are adapted for changing an angle (α1, α2) enclosed by the surface of the base plate (10) and the surface of the mounting plate (4) and/or the viewing angle of the optical canning system (3a, 3b).

**4.** The scanning device according to any of claims 1 to 3, **characterized in that** the means for moving (23) are adapted for changing an/the angle (α1, α2) between the surface of the base plate (10) and the surface of the mounting plate (4) in a range between 20° and 90°, such as between 40° and 90° or between 40° and 80°.

**5.** The scanning device according to any of claims 1 to 4, **characterized in that** the base plate (10) is adapted to be linearly displaced in a first direction (11) and in a second direction (12).

**6.** The scanning device according to any of claims 1 to 5, **characterized in that** the scanning device (1) further comprises at least one holding device (8a, 8b) for holding at least one dental object (2a, 2b).

**7.** The scanning device according to claim 6, **characterized in that** the at least one holding device (8a, 8b) is rotatable about an axis of rotation.

**8.** The scanning device according to any of claims 1 to 7, **characterized in that** the optical scanning system (3a, 3b) comprises an illumination device (3a) and a light detecting device (3b).

**9.** The scanning device according to any of claims 1 to 8, **characterized by** a sensor for detecting a position of the mounting plate (4).

**10.** A method for scanning dental objects (2a, 2b) comprising the following steps:
a) attaching a dental object (2a, 2b) to the base plate (10) of a scanning device (1) according to any of claims 1 to 9, wherein a first angle (α1) between the surface of the base plate (10) and the surface of the mounting plate (4) or the plane defined by the optical axes of the scanning device is enclosed;
b) scanning the attached dental object (2a, 2b) to obtain a first data set;
c) using the means for moving (23) the mounting plate (4) to change the first angle (α1) to a second angle (α2);
d) scanning the attached dental object (2a, 2b) to obtain a second data set.

**11.** The method according to claim 10, **characterized in that** after step b) and/or after step d) the dental object (2a, 2b) is linearly displaced and then scanned to obtain one or two further data sets.
